# EUROPEAN PATENT SPECIFICATION

(11) **EP 0 396 953 B1**
(45) Date of publication and mention of the grant of the patent: **01.06.1994**
(21) Application number: 90107665.3
(22) Date of filing: 23.04.1990
(51) Int. Cl.: G01F 3/22

(54) **A simplified kinematic motion for aeriform meters with measuring chambers provided with diaphragms**
Vereinfachter kinematischer Bewegungsablauf für Gaszähler mit Messkammern, welche mit Membranen ausgestattet sind
Mouvement cinématique simplifié pour des débitmètres à gaz avec des chambres de mesure pourvues de membranes

(30) Priority: 28.04.1989 IT 2030289
(43) Date of publication of application: 14.11.1990
(73) Proprietor: FABBRICHE RIUNITE MISURATORI SACOFGAS S.p.A, I-20141 Milan (IT)
(72) Inventor: Belloni, Roberto, I-20159 Milan (IT)
(74) Representative: Dr. Ing. A. Racheli & C. S.r.l.

(56) References cited:
- EP-A- 0 246 721
- GB-A- 328 503
- AMERICAN GAS JOURNAL vol. 174, no. 6, June 1951, FARSTA SE pages 27 - 30; H.J. EVANS: "Measurement by positive displacement"

## Description

The present invention refers to the field of gauges or meters of the so-called diaphragm type for aeriform substances, and particularly to kinematic motion which foresees the confinement of the measurement volume and the outlet of the aeriform substance from the containers (measuring chambers), as well as the counting of the number of measurements taken. It relates to both limited chamber type and free chamber type meters.

Many types of aeriform meters are known, in particular for gas; in the case where the gas pressures are not very high and the rates of flow do not exceed 200/m³/h, the most widely used are the dry type, with measuring chambers provided with an internal diaphragm. The physical principle which governs the working of this type of meter consists in the confinement, during each individual measurement, of a known volume of gas (measurement volume) in two suitable containers, called measuring chambers, each having an internal diaphragm, which is moved by the gas under pressure which is entering or exiting. The measurement consists in the continuous repetition of the operations of confinement and outlet of the gas from the chambers, taking account of the number of times this operation is carried out. In order to do this, use is made of kinematic motions; in particular, the separation diaphragms of the measuring chambers are connected, by means of a flag to a flag rod, which rotates alternatively in one direction and the other, in correspondence with the motion of translation of the diaphragm inside the corresponding chamber; this motion is transmitted, by means of a system of transmission arms, to slide valves, which cyclically allow the filling and subsequent emptying of the measurement chambers. The kinematic motion also foresees the transmission of the motion to the counter unit gearing, by means of a system of connecting rods/cranks. The reason for the number of measuring chambers being two instead of one is the need to facilitate the overcoming of the dead centers during rotation of the crank mechanism.

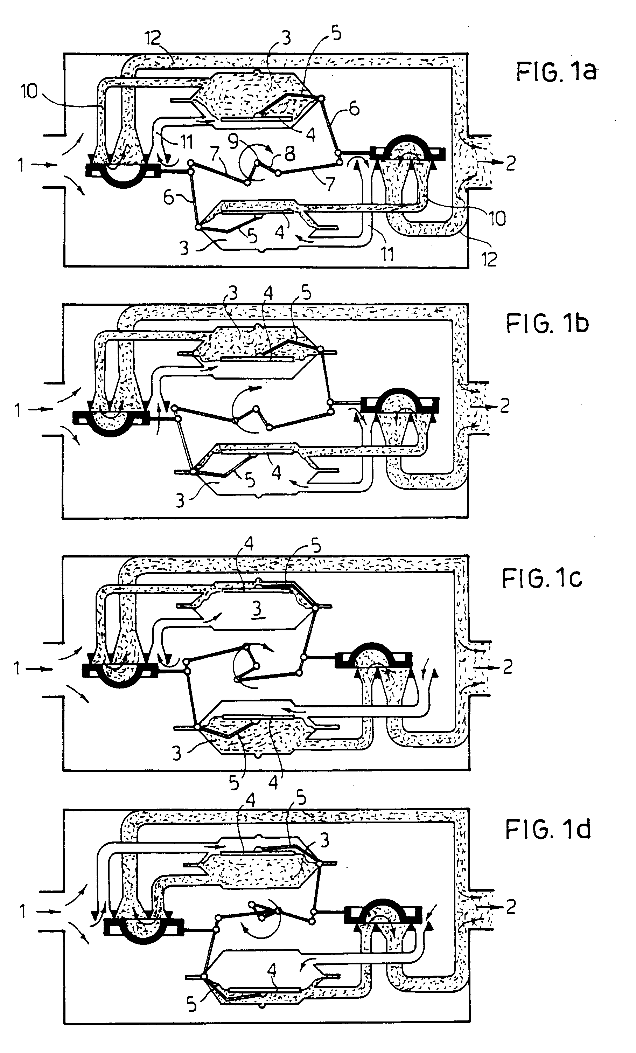

A detailed diagram of the working of a meter with the known type of measuring chambers with diaphragm is shown in figs. 1a to 1d, each of which corresponds to a different phase of the measurement cycle. In each figure the meter is shown in a top view, having an inlet 1 and an outlet 2 for the gas. Inside the meter two measuring chambers 3 can be seen, positioned one at the side of the other, each of them having an internal diaphragm 4, movable in a horizontal direction. Each diaphragm 4, is connected by means of a flag 5, to a flag arm 6, which in its turn is connected to a connecting rod 7. The two flags 5 are pivoted one at one end and one at the opposite end of the respective measuring chamber. The two connecting rods 7 are connected to a crank mechanism 8, which rotates around a pin 9, connected to the measurement gearing. Two ducts 10, 11 are connected to each chamber for filling and emptying the same; the two ducts 10, 11 are connected at the end of the chamber 3 opposite the end on which the flag 5 is pivoted. In the intermediate position between the ducts 10 and 11, a third duct 12 is located, connected to the exit 2 of the meter. The free ends of the ducts 10, 11, 12 are connected to each other by a pair of slide valves 13, sliding in a horizontal or vertical direction since they are connected to the arms 14 pivoted to the flag arms 6 of the kinematic motion. The two valves 13, therefore, are positioned one on one side and one on the opposite side with respect to the chamber 3. In the different positions shown in figs. 1a to 1d, the valves 13 connect the exit duct 12 alternatively to the duct 10, leaving the duct 11 free to be filled with gas, or to the duct 11, while the duct 10 is filled. The flow of gas inside the measuring chamber and the ducts is shown by shading. The sliding movement of the valves 13 is controlled by the same diaphragms 4 and by the arms 14, connected to the arms 6 of the kinematic motion, and then by the gas under pressure going through the measuring chamber. In particular it can be seen how the movement of the sliding valve belonging to a certain measuring chamber is controlled by the movement of the diaphragm belonging to the other measuring chamber.

The main drawback associated with kinematic motion for gas meters of the known type lies in the high number of connecting rods and arms which are used to obtain a precise, correct movement of the distribution slide valves. As a result, the known realizations are very expensive to produce, less reliable and of low precision.

Another drawback concerns the provision to operate the slide valves by means of connecting rod/crank system. Because of the finite length of the connecting rod, in fact, a closing or opening stroke of the valve will not have a corresponding rotation of the crank of exactly 90°; the time taken by the valve during a half stroke will therefore be different from the time taken during the other half stroke, thus causing unequal filling of one chamber with respect to the other, because of the not perfect rigidity of the diaphragm.

American Gas Journal, vol. 174, No. 6, June 1951, FARSTA SE pages 27-30; H.J. EVANS describes a gas meter according to the preamble of claim 1 having flexible measuring chambers and a kinematic motion comprising a plurality of arms and actuating the slide valves by means of a crank. The arrangement of the slide valves and the kinematic motion does not allow to reduce the overall dimensions of the device.

EP-A-246.721 also discloses a gas meter with flexible measuring chambers, whose structure, which comprises, inter alia, a lot of gears, is very complex and expensive.

GB A 328 503 describes a valve gear for gas meters with a slot and pin connection that acts as a movable hinge and has only the purpose of transferring the rotatory movement of a rock arm to the slide valve, without modifying the movement.

The aim of the present invention is therefore to avoid the drawbacks described above, by realizing a kinematic motion for gas meters which has a simple structure and which therefore simplifies construction and assembly operations, thereby facilitating mass-production. In addition, the intention is to realize a kinematic motion which prevents the introduction of errors in measuring due to the finite length of the connecting rod and to obtain, if so desired, phase advances or lag for the distribution slide valves.

Said aim has been achieved by the realization of a gas meter with a kinematic motion according to the appended indipendent claim.

Preferred embodiments are described in the dependent claims.

The present invention will now be more clearly described with reference to the enclosed drawings, in which:
- fig. 1a and 1d: show diagrammatically a kinematic motion for a meter of the known type in four different working phases;
- fig. 2: shows a transverse section of the measuring chamber of the meter provided with the kinematic motion in fig. 3;
- fig. 3: shows a top view of the kinematic motion which is the object of the present invention.

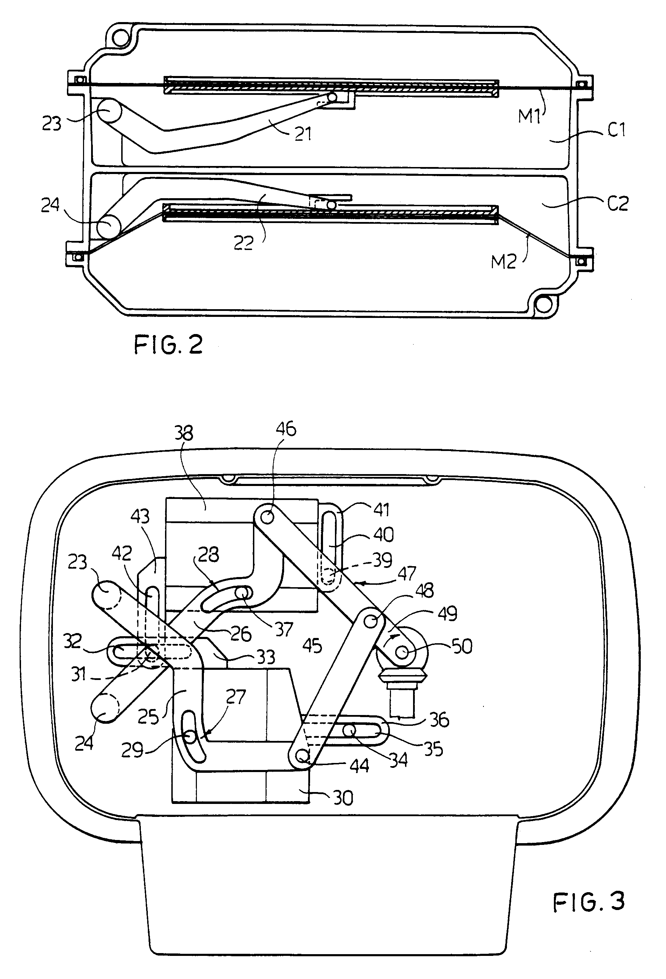

With reference to fig. 2, the measuring chambers C1 and C2 can be seen, located one at the side of the other, each with its respective internal diaphragm M1 and M2, able to slide in a horizontal direction (vertical in the figure). The diaphragm M1 is connected to the flag 21, while the diaphragm M2 is connected to the flag 22. The flags 21 and 22 are pivoted on the respective flag rods 23 and 24, having axes perpendicular to the plan of the figure, which are made to rotate by the movement of the flags 21 and 22. With respect to the kinematic motion shown in figs. 1a to 1d, it can be seen how, in this case, the flag rods 23 and 24 are positioned on the same side with respect to the measuring chambers, instead of on opposite sides.

With reference now to fig. 3, which shows a top view of the meter in fig. 2, the flag rods 23 and 24 described above can be seen. A flag arm 25 is connected rigidly to the flag rod 23, while a flag arm 26 is connected rigidly to the flag rod 24. The flag arms 25 and 26 follow the flag rods 23 and 24 in their angular rotation which is determined by the sliding of the diaphragms M1 and M2 and, when seen in plan, they have a double bending which gives them an approximate S shape. Inside the flag arm 25 a suitably shaped slide guide 27 can be seen in correspondence with one of the bends. In correspondence, the flag arm 26 has a slide guide 28, also shaped, in the section corresponding to one Of its bends. Inside the slide guide 27, a pin 29 can slide, integral with a sliding valve 30, which is seen in a top view in fig. 3. The movement of the pin 29 inside the slide guide 27 during the rotation of the flag rod 25 causes the translation of the valve 30 in a horizontal direction; in this translatory motion, the valve 30 is guided by a first pin 31, located inside a slide guide 32 whose shape is elongated in a horizontal direction, made inside an ear 33, integral with the valve 30, and also by a second pin 34, also sliding in a slide guide 35 whose shape is elongated in a horizontal, direction, made inside a second ear 36, integral with the valve 30. The pins 31 and 34 are integral with the structure of the measuring chambers C1 and C2.

Inside the slide guide 28, however, a pin 17 is free to slide, integral with a second slide valve 38 which is also seen in a top view in fig. 3. The movement of the pin 37 inside the slide guide 28 during the rotation of the flag rod 26 causes the sliding of the valve 38, in a vertical direction in the figure. During this movement, the valve 38 is guided by a first pin 39, sliding inside a slide guide 40, whose shape is elongated in a vertical direction, made inside an ear 41, integral with the valve 38, and also by a second pin, represented by the pin 31 previously described, which is free to slide inside a slide guide 42, whose shape is elongated in a vertical direction, made inside an ear 43, integral with the valve 38. The pin 39 is also integral with the structure of the measuring chambers C1 and C2.

The opposite end of the flag arm 25 to the flag rod 23 is connected to a tangent link 45 by means of a hinge 44. Analogously, the opposite end of the flag arm 26 to the flag rod 24 is connected to a second tangent link 47 by means of a hinge 46. The opposite end of the tangent link 45 to the hinge 44 is connected to the tangent link 47 by means of a hinge 48; the hinge 48 forms the pin of a crank 49 hinged to a pin 50 at the opposite end to the hinge 48. The rotatory motion of the crank 49 is transmitted to the measurement gearing of the amount of gas delivered.

The working of the kinematic motion is analogous to that of the known type of kinematic motion, shown in figs. 1a-1d; that is, it allows the transformation of the reciprocating rotatory motion of the flag rods 23 or 24 into a translatory motion, also reciprocating, of the slide valves 30 and 38, and also into continuous rotatory motion (clockwise in fig. 3) of the crank 49, which allows the counting of the number of fillings and subsequent emptyings of the measuring chambers. This is achieved thanks to the particular shape of the slide guides 27 and 28, made respectively on the flag arms 25 and 26; in this way the use of further arms is avoided, which are shown with 14 in figs. 1a-1d. In addition, the motion of the valves 30 and 38 takes place in two directions perpendicular to each other; this allows the positioning of the flag rods 23 and 24, and thence the flag arms 25 and 26, on the same side with respect to the measuring chamber, so as to allow the use of only one crank 49.

In this way, a kinematic motion has been realized for aeriform meters, in particular gas meters, which satisfies the aims expressed above; it has a simplified structure, which uses a smaller number of elements; in addition, the operation of the slide valves is obtained by means of the sliding of pins in shaped slide guides instead of by means of arms, thus avoiding the introduction of errors in measurement. Finally, by shaping the slide guides suitably, possible phase advances or lags can be obtained during the stroke of the valves.

## Claims

1. An gas volume meter of the type comprising two measuring chambers of substantially rectangular shape in plan view, said chambers being placed side by side along a major side and each containing a movable diaphragm, said chambers, by virtue of the movement of said diaphragms, repetitively and alternately taking in a measurement volume of gas, and then expelling said measurement volume from the respective measuring chamber to an outlet, means being provided for counting of the number of measurement volumes taken in and expelled, and including a kinematic motion comprising a pair of flags (21, 22) connected to the respective diaphragms (M1, M2) and responsive to the movement thereof, said flags being connected, at the other ends, to respective flag rods (23, 24), connected in their turn to flag arms (25, 26) which cause, through valve operating means, the translatory motion of a pair of sliding valves (30, 38), which allow the inlet of the aeriform substance into the measuring chambers (C1, C2) and its outlet from the same, said flag arms (25, 26) also being connected, at their opposite ends with respect to the flag rods (23, 24), to a pair of tangent links (45, 47), connected in their turn to a single crank for transmitting motion to a measurement gearing, characterized in that the two flag rods (23, 24) are located respectively adjacent two adjacent minor sides of the measuring chambers (C1, C2), and in that said valve operating means comprise respective pins (29, 37) integral with said valves and located in respective slots (27, 28) which are longitudinally curved, in the flag arms (25, 26), or viceversa, such that translatory motion of the sliding valves derives directly from the motion of the flag arms.

2. An aeriform meter according to claim 1, characterized in that said arms (25, 26) have a double curve, such as to form, in plan view, a substantially S-shaped configuration, in one of the curves of the S being provided the said slot (27, 28).

3. An aeriform meter according to claim 1 or 2, characterized in that the translatory motion of the slide valves (30, 38) takes place in directions at right angles to each other, parallel with respect to the major and minor sides of the chambers (C1, C2), respectively.

4. An aeriform meter according to any of the previous claims, characterized in that said slide valves (30) and (38) are operated during the translatory motion by slot and pin assemblies (31, 32; 34, 35) and (31, 42; 39, 40).

5. An aeriform meter according to any of the previous claims, characterized in that said slide valves (30, 38) and said kinematic motion (23, 24;25, 26;45, 47;49, 50) are included within the plan overall dimension in plan view of said measuring chambers (C1, C2).

## Patentansprüche

1. Gasvolumenmesser von der Art die zwei Messkammern umfasst mit im Grundriss im wesentlichen rechteckiger Form, welche Kammern entlang einer Längsseite nebeneinander liegen und eine jede eine bewegliche Scheidewand enthält, welche Kammern aufgrund der Bewegung der Scheidewände, wiederholend und abwechselnd, ein zu messendes Volumen an Gas einbringen und dann dieses zu messende Volumen von der respektiven Messkammer ausstösst, zu einem Auslass, wobei Mittel vorgesehen sind zur Zählung der Anzahl eingebrachten und ausgestossenen Messungen des Volumens, und eine kinematische Bewegung einschliesst, umfassend ein Hebel-Paar (21, 22) welches mit den jeweiligen Scheidewänden (M1, M2) verbunden ist und auf deren Bewegungen ansprechbar ist, welches Hebel-Paar am andern Ende mit zugehörigen Hebelwellen (23, 24) verbunden ist die, ihrerseits, mit Hebelarmen (25, 26) verbunden sind, welche mittels Ventil betätigende Mittel die Verschiebebewegung eines Schieber-Paars (30, 38) bewirken, die den Einlass der gasförmigen Substanz in die Messkammern (C1, C2) und deren Auslass aus dieser gewährleisten, welche Hebelarme (25, 26) an ihren entgegengesetzten Enden mit Bezug auf die Hebelwellen (23, 24) ausserdem mit einem Paar Pleuelstangen (45, 47) verbunden sind die ihrerseits mit einem einzelnen Hebel zur Übertragung der Bewegung an ein Messgetriebe verbunden ist, dadurch gekennzeichnet, dass die zwei Hebelwellen (23, 24) jeweils anliegend mit zwei anliegenden kleineren Seiten der Messkammern (C1, C2) angeordnet sind und dass die das Ventil betätigenden Mittel zugehörige Zapfen (29, 37) besitzen, einteilig mit diesen Schiebern und in respektiven Schlitzen (27, 28) angeordnet sind, welche der Länge nach in den Hebelarmen (25, 26) oder umgekehrt gebogen sind, derart, dass eine Verschiebebewegung der gleitenden Schieber unmittelbar von der Bewegung der Hebelarme abhängt.

2. Gasmesser nach Anspruch 1, dadurch gekennzeichnet, dass die Arme (25, 26) eine doppelte Krümmung besitzen, derart um im Grundriss eine im wesentlichen S-förmige Formgebung zu bilden, wobei in einer der Kurven des S dieser Schlitz (27, 28) ausgebildet ist.

3. Gasmesser nach Anspruch 1 oder 2, dadurch gekennzeichnet dass die Verschiebebewegung der Gleitschieber (30, 38) in gegenseitig rechtwinkligen Richtungen erfolgt, parallel respektiv in Bezug auf die grössere und kleinere Seite der Kammern (C1, C2).

4. Gasmesser nach einem der vorangehenden Ansprüche, dadurch gekennzeichnet, dass die Gleitschieber (30) und (38), während der Verschiebebewegung, durch Schlitz und Zapfenverbindungen (31, 32; 34, 35) und (31, 42; 39, 40) bewirkt sind.

5. Gasmesser nach einem der vorangehenden Ansprüche, dadurch gekennzeichnet, dass die Gleitschieber (30, 38) und die kinematische Bewegung (23, 24; 25, 26; 45, 47; 49, 50), im Aussenmass, im Grundriss dieser Messkammern eingeschlossen sind.

## Revendications

1. Mesureur de volume de gaz du type comprenant deux chambres de mesure de forme pratiquement rectangulaire en plan, lesdites chambres étant côte à côte sur des côtés les plus grands, chacune contenant une membrane mobile, lesdites chambres par l'intermédiaire du mouvement desdites membranes par répétition et alternativement prennent une mesure du volume de gaz et expulsant ensuite ledit volume de mesure des chambres de mesure respectives à une sortie, des moyens pour le comptage du nombre de mesure de volume absorbé et expulsé étant prévus, et incluant un mouvement cinématique comprenant un couple de bras de levier (21, 22) reliés aux membranes respectives (M1, M2) et sensibles à son mouvement, lesdits bras de levier étant reliés à l'autre extrémité à des arbres respectifs (23, 24), à leur tour reliés à des bras (25, 26) qui causent, à travers des moyens adaptés qui actionnent la valve, le mouvement de translation d'un couple de valves (30, 38) à tiroir, permettant l'entrée du gaz dans les chambres de mesure (C1, C2) et sa sortie de ces dernières, les bras (25, 26) étant aussi reliés, à leurs extrémités opposées par rapport aux arbres (23, 24), à un couple de bielles (45, 47), à leur tour reliées à une seule manivelle pour transmettre le mouvement à un rouage de mesure, caractérisé en ce que les deux arbres (23, 24) sont respectivement placés de façon adjacente aux deux côtés moins grands adjacents aux chambres de mesure (C1, C2), et que lesdits moyens d'actionnement de la valve comprennent des axes (29, 37) respectifs solidaires de ces valves et placés dans des cannelures respectives, cintrées longitudinalement (27, 28), dans les bras (25, 26), ou vice-versa, si bien que le mouvement de translation de la valve à tiroir dérive directement du mouvement des bras.

2. Mesureur de gaz selon la revendication 1, caractérisé en ce que lesdits bras (25, 26) ont un double cintrage, leur permettant d'avoir pratiquement en plan la forme d'un S, ladite cannelure (27, 28) ayant été prévue dans une des courbes du S.

3. Mesureur de gaz selon la revendication 1 ou 2, caractérisé en ce que le mouvement de translation des valves à tiroir (30, 38) se fait selon des directions entre elles orthogonales, respectivement parallèles aux côtés les plus grands et les moins grands des chambres (C1, C2).

4. Mesureur de gaz selon n'importe laquelle des revendications précédentes, caractérisé en ce que lesdites valves à tiroir (30) et (38) sont guidées au cours de leur mouvement de translation par des groupes axe-cannelure (31, 32; 34, 35) et (31, 42; 39, 40).

5. Mesureur de gaz selon n'importe laquelle des revendications précédentes, caractérisé en ce que lesdites valves à tiroir (30, 38) et ledit mouvement cinématique (23, 24; 25, 26; 45, 47; 49, 50) sont compris dans l'encombrement en plan desdites chambres de mesure (C1, C2).
